# DEMANDE DE BREVET EUROPEEN

(11) **EP 0 557 164 A1**
(43) Date de publication de la demande: **25.08.1993**
(21) Numéro de dépôt: 93400335.1
(22) Date de dépôt: 10.02.1993
(51) Int. Cl.: B60C 15/028

(54) **Dispositif d'insert de verrouillage pour chambre de pneumatique**

(30) Priorité: 18.02.1992 FR 9201829
(71) Demandeur: HUTCHINSON, F-75008 Paris (FR)
(72) Inventeur: Boni, Bernard, F-95660 Champagne S/Oise (FR); Pelletier, Bruno, F-60340 Villiers S/St-Leu (FR)
(74) Mandataire: Orès, Bernard

(57) **Abrégé**

Dispositif d'insert de verrouillage pour chambre de pneumatique (20) destiné à équiper une roue de véhicule munie d'un pneumatique sans chambre à air monté sur une jante monobloc (21) à puits ou creux de jante (22) en vue de s'opposer au déjantage des talons (T₁, T₂) du pneumatique lors d'une crevaison par appui d'au moins un des talons (T₁) sur une butée.

Cette dernière est ménagée sur une bande en un matériau rigide, mais déformable, conformée suivant un anneau fendu parallèlement à l'axe (X) de la jante qu'il équipe et qui est ainsi limitée par au moins deux bords, la bande présentant une section droite correspondant au moins en partie à la forme de la jante (21) sur laquelle elle est appliquée et immobilisée lorsque sont rendus opératoires des moyens de solidarisation de ses bords, après montage de la bande sur la jante.

## Description

L'invention a pour objet un dispositif d'insert de verrouillage pour chambre de pneumatique.

On connaît déjà diverses réalisations d'inserts de verrouillage pour chambre de pneumatique, c'est-à-dire de dispositifs qui, placés à l'intérieur d'un pneumatique sans chambre à air monté sur une jante, permettent aux véhicules dont ils équipent les roues de conserver leur motricité en cas de crevaison, et cela en empêchant les talons du pneumatique de se séparer de leurs sièges sur la jante, en particulier lorsque cette dernière est du type à puits ou creux de jante (drop center) voir, par exemple, FR-A-2 311 667, GB-A-1 348 892, ou FR-A-2 271 945. Ces réalisations connues, généralement destinées à des véhicules militaires ou à des véhicules civils très particuliers, sont d'un prix trop élevé pour pouvoir être mis en oeuvre sur des véhicules de transport routier usuels comme des camions, des autobus ou autocars, etc...

C'est, par conséquent, un but général de l'invention de fournir un dispositif d'insert de verrouillage pour chambre de pneumatique bien adapté par son coût, mais aussi par ses facilités de montage et de démontage sans outillage spécialisé, à sa mise en oeuvre sur des véhicules à roues équipées de jantes, non démontables, à puits ou creux de jante.

C'est, à cet égard, un but de l'invention de fournir un tel dispositif qui évite le déjantage des pneumatiques dont il équipe les roues permettant ainsi au véhicule qui en est muni de conserver sa motricité et de rouler à plat sur quelques kilomètres.

C'est, aussi, un but de l'invention de fournir un tel dispositif d'insert de verrouillage pour chambre de pneumatique propre à équiper une roue de véhicule susceptible de se déplacer à vitesse élevée et qui, par conséquent, soit de faible poids et de fabrication aisée.

Dans un dispositif d'insert de verrouillage destiné à équiper une roue de véhicule munie d'un pneumatique sans chambre à air monté sur une jante monobloc à puits ou creux de jante en vue de s'opposer au déjantage des talons du pneumatique lors d'une crevaison, par appui d'au moins un des talons du pneumatique sur une butée, l'invention propose que la butée soit ménagée sur une bande en un matériau rigide mais déformable, conformée suivant un anneau fendu parallèlement à l'axe de la jante qu'il équipe et qui est ainsi limitée par au moins deux bords, la bande présentant une section droite correspondant au moins en partie à la forme de la jante sur laquelle elle est appliquée et immobilisée lorsque sont rendus opératoires des moyens de solidarisation de ses bords, après montage de la bande sur la jante.

Le matériau rigide constitutif de la bande peut être une tôle métallique et, dans ce cas, la bande est également conformée, -au moins sur sa tranche circonférentielle qui ménage la butée-, suivant un bord recourbé ou roulé afin de ne pas poinçonner le talon du pneumatique qui coopère avec ledit bord, lors d'une crevaison du pneumatique.

Dans une autre forme de réalisation, le matériau rigide de la bande est un matériau composite à base d'une résine thermoplastique armée.

Dans encore une autre réalisation, le matériau de la bande est à base d'une résine thermo-durcissable du type époxy, phénolique ou polyester armée de fibres de verre.

En variante, le matériau constitutif de la bande est choisi parmi les polyuréthannes ou encore parmi les matériaux du type des polyéther block amide comme ceux vendus sous la dénomination commerciale PEBAX (Marque Déposée de la Société ATOCHEM) ou encore du type des polyester élastomères comme ceux vendus sous la dénomination commerciale HYTREL (une Marque Déposée de la Société DUPONT DE NEMOURS).

Dans une réalisation avantageuse, la résine thermoplastique constitutive du matériau composite formant la bande est choisie dans la famille des polyamides séquencés pour mise en oeuvre par les techniques RIM (Reaction Injection Molding) et elle est armée de renforts en fibres de verre, procurant ainsi un matériau ayant de très bonnes caractéristiques mécaniques de résistance en traction et en compression, une très bonne tenue en fatigue, à l'échauffement et aux chocs ainsi qu'un coefficient de dilatation notablement réduit par rapport à celui de la résine thermoplastique seule, avantageusement voisin de celui du matériau constitutif de la jante.

Les bonnes caractéristiques mécaniques du matériau mis en oeuvre permettent de donner à l'ensemble du dispositif une forme à section droite de faible épaisseur avec pour conséquence un poids réduit et une grande facilité de montage du dispositif sur la jante.

La section droite de la bande est quelque peu en 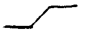 dans sa partie qui épouse le puits de jante et le "grand siège" de ladite jante sur lequel repose un premier talon du pneumatique qui coopère avec la butée en cas de crevaison du pneumatique.

Dans une forme de réalisation, la bande est conformée sur sa tranche périphérique opposée à celle ménageant la butée suivant une aile destinée à venir au contact du second talon du pneumatique pour empêcher ce second talon de se déplacer latéralement sur la jante lors d'une crevaison ou autre incident survenant au pneumatique, de sorte que ce dernier ne déjante pas, permettant ainsi au véhicule dont les roues sont équipées des dispositifs selon l'invention de conserver sa motricité et en grande partie sa tenue de cap, d'une part, et, d'autre part, autorisant un roulage à plat sur quelques kilomètres.

Dans une forme de réalisation, une cale en matériau du type élastomère est prévue sur la tranche circonférentielle de la bande qui ménage la butée, ledit matériau étant avantageusement choisi dans la famille des caoutchoucs souples à bonnes caractéristiques de dureté rémanente à la compression.

Selon une autre caractéristique de l'invention, les moyens de solidarisation des bords de la bande constitutive du dispositif sont le plus simplement du type à vis/écrou ou, en variante, du type des fermetures à genouillère (ou grenouillère), avec ou sans ressort de réglage pour prendre en compte les différences de cotes des jantes et pneumatiques d'une roue de même dimension nominale.

Dans le cas d'un dispositif à vis/écrou, l'invention propose une forme d'exécution préférée dans laquelle un ou des câble(s) noyé(s) dans le matériau constitutif de la bande sont munis à leurs extrémités en saillie sur les bords libres de la bande de filetages avec lesquels sont propres à coopérer les deux taraudages inversés d'un manchon qui, lorsqu'il est actionné, rapproche les extrémités du ou des câble(s) et les maintient assemblées.

Selon encore une caractéristique de l'invention, la largeur de la bande (mesurée parallèlement à l'axe de la jante) est sensiblement égale ou très légèrement inférieure à la distance séparant les faces internes des talons du pneumatique dans la condition de montage sur la jante.

L'invention sera bien comprise par la description qui suit, faite à titre d'exemple et en référence au dessin annexé dans lequel :
- la figure 1 est une vue partielle, en coupe, d'une chambre de pneumatique équipée d'un dispositif selon l'invention et montée sur une jante à creux ou puits de jante ;
- la figure 2 est une vue en élévation d'un dispositif selon l'invention en cours de montage sur une jante de roue de véhicule ;
- la figure 2A est une vue partielle de détail très schématique des moyens de solidarisation des bords d'un dispositif selon l'invention pour une variante de réalisation ;
- la figure 2B est une vue partielle analogue à celle de la figure 1 pour une variante de réalisation du dispositif selon l'invention ;
- la figure 2C est une vue partielle de dessus suivant la direction de la flèche F de la figure 2B ;
- la figure 2D est une vue partielle en coupe selon la ligne D-D de la figure 2B ;
- la figure 3 est une vue analogue à celle de la figure 1, mais pour une autre forme de réalisation ;
- la figure 4 est une vue analogue à celles des figures 1 et 3, mais pour encore une autre forme de réalisation ;
- la figure 5 est une vue partielle analogue à celle des figures 1 et 2B, mais pour encore une autre forme de réalisation ;
- la figure 6 est une vue partielle en coupe selon la ligne 6-6 de la figure 5.

Un dispositif d'insert de verrouillage pour chambre de pneumatique selon l'invention, 10, est prévu pour être logé à l'intérieur d'un pneumatique 20, sans chambre à air, monté sur une jante de roue 21, du type monobloc, c'est-à-dire comportant un puits ou creux de jante 22 entre une première partie 23 ou "grand siège" sur laquelle repose un premier talon T₁ du pneumatique 20 et une seconde partie 24 ou "petit siège" sur laquelle repose le second talon T₂ du pneumatique 20, les parties 23 et 24 étant bordées, vers l'extérieur de la jante, par des épaulements 26 et 27, respectivement, qui servent d'appui aux talons T₁ et T₂ du pneumatique 20.

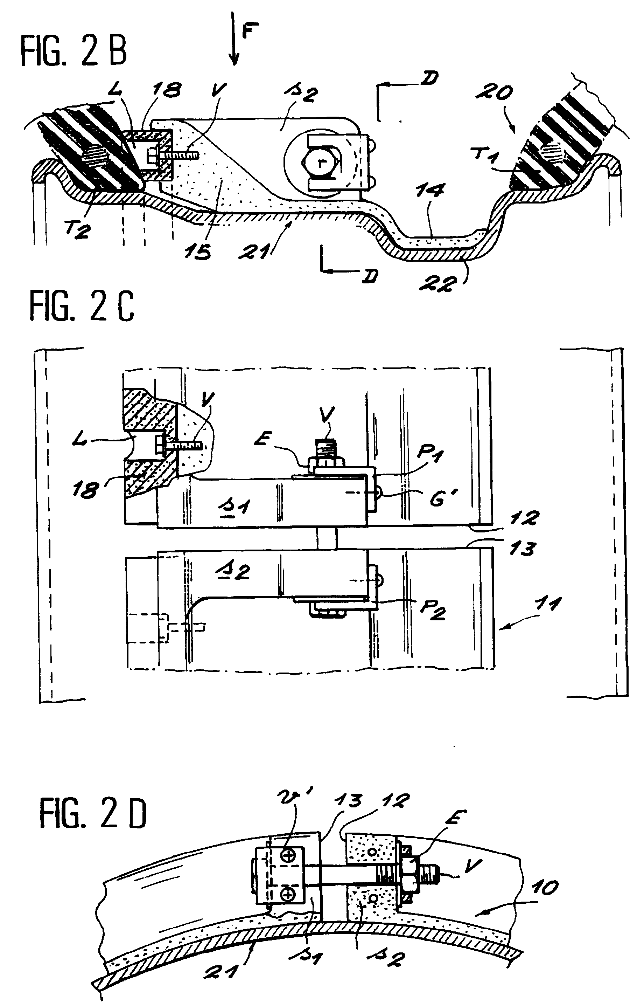

Le dispositif selon l'invention, 10, comprend essentiellement une bande 11 en un matériau rigide mais déformable et qui peut être une tôle métallique, un matériau composite à base de résine thermodurcissable comme une résine époxy, phénolique ou polyester armée de fibres de verre, ou un matériau choisi parmi les polyuréthannes, ou encore un matériau du type des polyéther block amide, par exemple celui vendu sous le nom commercial PEBAX (une Marque Déposée de la société ATOCHEM) ou encore un matériau du type des polyester élastomères comme celui vendu sous la dénomination commerciale HYTREL (une Marque Déposée de la Société DUPONT DE NEMOURS), ou également un matériau composite à base d'une résine thermoplastique, de préférence une résine thermoplastique choisie dans la famille des polyamides séquencés pour mise en oeuvre par les techniques RIM (Reaction Injection Molding) armée de renforts en fibres de verre. La bande 11 est conformée suivant un anneau fendu au moins une fois parallèlement à l'axe X de la jante qu'il équipe, avec alors des bords libres 12 et 13, figure 2 ou, en variante, est fendu plusieurs fois parallèlement à l'axe X de la jante, c'est-à-dire est réalisé en plusieurs tronçons réunis entre eux.

Quel que soit le mode d'exécution, la bande 11 est à section droite quelque peu en 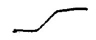 pour présenter une première partie 14 de forme conjuguée de celle du puits ou creux de jante 22 et une seconde partie 15 à forme partiellement conjuguée de celle du "grand siège" 23 de la jante avec laquelle elle est destinée à coopérer, les parties 14 et 15 étant réunies par une troisième partie 16 destinée à coopérer et épouser la surface externe de la jante 21 dans sa zone reliant le puits ou creux de jante 22 et le "grand siège" 23.

Dans la forme de réalisation décrite et représentée, la partie 15 qui forme une butée pour le maintien du talon T₁ de pneumatique en cas de crevaison et pour s'opposer au déjantage de ce dernier est en outre munie, sur sa tranche circonférentielle, d'une cale en un matériau du type élastomère, 18, avantageusement un caoutchouc souple résistant bien au vieillissement et à bonnes caractéristiques de dureté rémanente à la compression pour éviter son fluage.

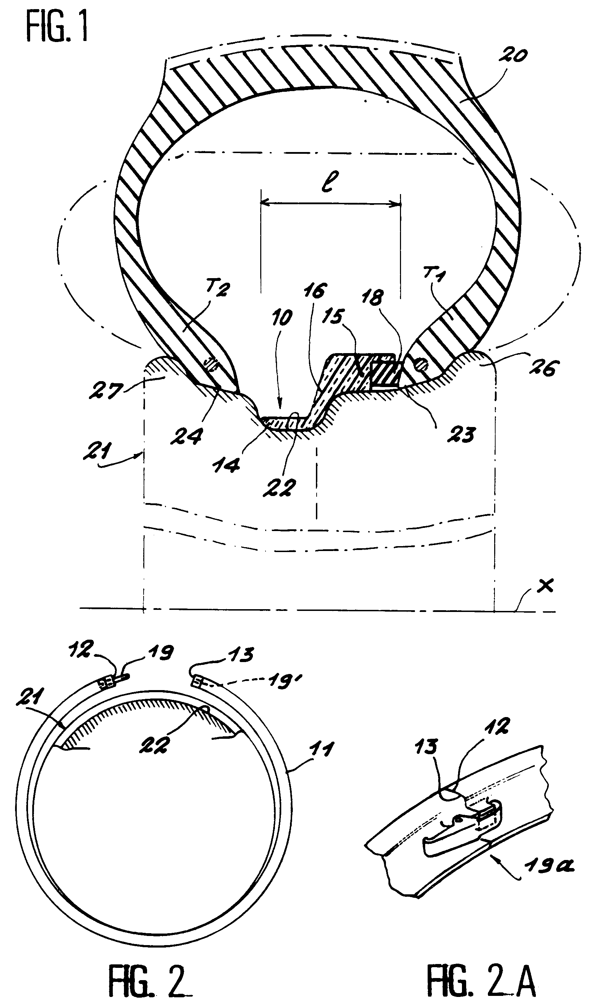

Selon l'invention, la largeur l de la bande 11, c'est-à-dire la dimension de cette bande mesurée parallèlement à l'axe X de la jante, est telle que lorsque ladite bande est montée sur la jante et que ses bords 12 et 13 sont solidarisés entre eux, -comme explicité ci-après-, avec sa partie 14 logée dans le creux ou puits de jante 22, la butée 15 maintient le talon T₁ du pneumatique 20 appliqué contre l'épaulement 26 de la jante. Dans cette condition assemblée, la force de poussée qu'exerce le dispositif s'oppose efficacement au dévirage du pneu sur la jante en cas de crevaison, lorsque le pneu prend la forme montrée en trait mixte sur la figure 1.

Pour la solidarisation entre eux des bords 12 et 13 de la bande 11, afin de former un anneau immobilisé sur la jante 21 après son montage sur celle-ci, le dispositif selon l'invention comprend également, comme montré sur les figures 2 et 2A, des moyens constitués, le plus simplement, par un ensemble vis/écrou montré schématiquement en 19, 19' sur la figure 2 ou, en variante, par des moyens de fermeture à genouillère (ou grenouillère), comme montrée schématiquement en 19a sur la figure 2A. Les moyens du type vis/écrou permettent de rattraper les différences de cote des jantes et pneumatiques d'une roue de même dimension nominale, ces éventuelles différences de cote étant prises en compte dans un système du type à genouillère (ou grenouillère) par un ressort ou une vis de réglage.

Dans le cas de moyens du type vis/écrou, ceux-ci sont avantageusement constitués par des filetages ménagés aux extrémités d'un ou de câble(s) noyés dans le matériau constitutif de la bande (par exemple d'un diamètre de l'ordre de 3 mm) et par un manchon à deux taraudages inverses qui, lorsqu'il est rendu opératoire, rapproche les extrémités des câbles et les maintient réunis entre eux.

La fixation de la bande 11 sur la jante empêche tout dévirage du dispositif et, par suite, l'apparition d'un balourd défavorable, tandis que l'effort de compression exercé par l'ensemble de la cale 18 et de la butée 15 garantit que la motricité du véhicule est conservée, en cas de crevaison, en raison du maintien du talon T₁ contre l'épaulement 26 de la jante.

Pour le montage d'un dispositif selon l'invention on met d'abord en place le talon T₁ sur la jante 21, au contact de l'épaulement 26, puis on introduit dans l'enveloppe du pneumatique le dispositif d'anneau 10, le plus simplement en déformant la bande par un effet de vrille pour lui donner une forme "d'escargot" rendue possible par le fait que la bande est fendue le long de ses bords 12 et 13. On rend alors opératoires les moyens de solidarisation 19, 19' ou 19a pour appliquer l'anneau 10 à serrage sur la jante 21 jusqu'à atteindre la condition montrée sur la figure 1 en laquelle la partie 14 du dispositif 10 épouse le fond du puits de jante et la cale 18, -fixée à la butée 15 par des vis ou rivets-, est comprimée contre le talon T₁ du pneu 20. Après mise en place du talon T₂, la pression de gonflage est appliquée et la roue montée sur le véhicule qu'elle est destinée à équiper.

De bons résultats ont été obtenus dans la réalisation montrée sur les figures 2B, 2C et 2D où le matériau mis en oeuvre pour la bande 11 est une résine thermoplastique du type de celle vendue sous le nom commercial de NYRIM (une Marque Déposée de la société DSM) armée par des fibres de verre. Dans cette réalisation, la cale 18 est en un caoutchouc du type EPDM, souple, d'une dureté de l'ordre de 65 Shore A et est fixée à la partie 15 de la bande 11 par des vis v logées dans des lamages L de la cale. Dans cette réalisation, l'anneau que forme la bande 11 est immobilisé sur la jante 21 par la solidarisation entre eux des bords 12 et 13 de ladite bande à l'aide d'une vis V coopérant avec un écrou E, l'ensemble étant immobilisé par des plaques-freins p₁ et p₂ elles-mêmes fixées par des vis v' sur des surépaisseurs s₁, s₂ règnant sur une partie des bords 12 et 13 de la bande 11. Un tel dispositif, insensible à la corrosion, est d'un poids de l'ordre de 1,5 kilo pour une jante de 17,5 pouces.

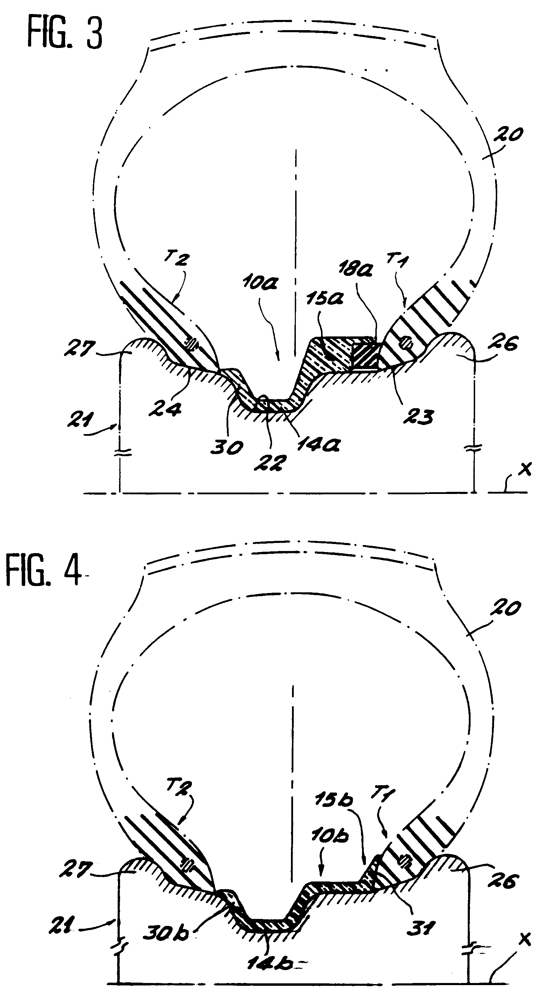

Dans la réalisation montrée sur la figure 3, la section droite du dispositif 10a est quelque peu en forme de U avec une butée 15a analogue à la butée 15 de la réalisation précédente, une cale 18a analogue à la cale 18 et une partie 14a qui épouse le creux de jante, ladite partie se poursuivant en direction du "petit siège" 24 de la jante par une aile 30 qui vient au contact du second talon T2 du pneumatique 20 après mise en place du dispositif 10a sur la jante, de façon identique à celle décrite pour la réalisation montrée sur les figures 1 et 2.

Dans la forme de réalisation montrée sur la figure 4, le dispositif 10b comprend une partie 14b analogue aux parties 14 et 14a des réalisations précédentes et une aile 30b analogue à l'aile 30 de la réalisation selon la figure 3 ; dans cette réalisation, cependant, la butée 15b est de plus faible épaisseur que celle des butées 15 et 15a des réalisations précédentes, d'une part, et est démunie d'une cale 18 ou 18a, d'autre part, ladite cale étant remplacée par une partie profilée à section droite quelque peu triangulaire, 31, sur laquelle prend appui le talon T₁, en cas de crevaison du pneumatique 20, l'ensemble du dispositif étant ici d'épaisseur sensiblement constante sur toute sa section droite.

Dans la mesure où les dispositifs selon les figures 3 et 4 sont eux aussi réalisés en le même matériau que celui décrit en détail en référence aux figures 1 et 2, il s'attache à ces réalisations les mêmes avantages de légèreté, d'absence de corrosion et de tenue aux chocs, coefficient de dilatation, etc...

Il en est de même lorsque la bande 11 est réalisée en une tôle métallique, les butées analogues aux butées 15, 15a et 15b étant alors ménagées par un bord recourbé ou roulé, ou une section droite en U, des tranches circonférentielles de la bande.

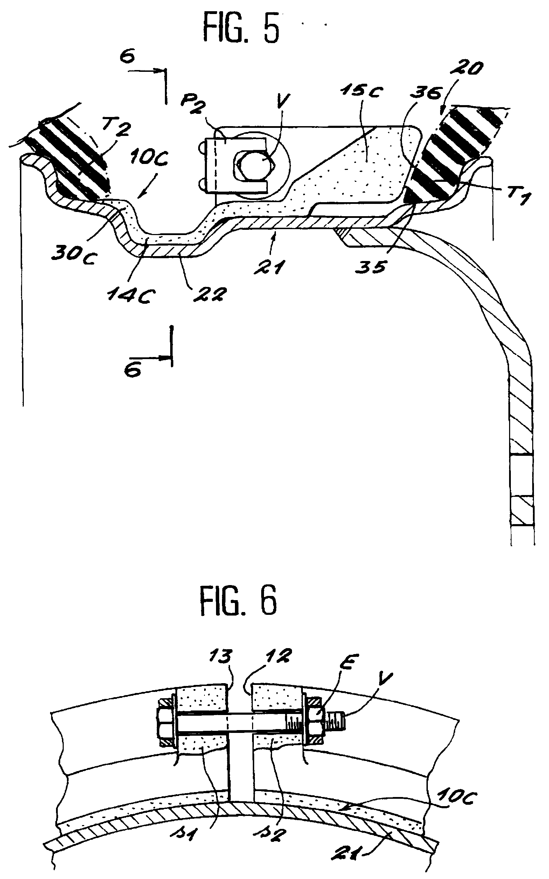

Dans la réalisation montrée sur les figures 5 et 6, le dispositif 10c comprend une partie 14c analogue aux parties 14, 14a et 14b des réalisations précédentes, une aile 30c analogue à l'aile 30 de la réalisation selon la figure 3 et une partie 15c, plus épaisse que le reste de la bande et qui, -lorsque ladite bande est fixée sur la jante 21 par les mêmes moyens de vis V et d'écrou E que ceux décrits en référence aux figures 2B à 2D-, est presque au contact, par sa face 35, de la surface interne en regard 36 du talon T₁ du pneumatique 20.

Dans cette réalisation également, les bords 12 et 13 de la bande constitutive du dispositif présentent des surépaisseurs s1 et s2 pour le passage de la vis V, de l'écrou E et pour la fixation des plaques de frein p₁ et p₂.

## Revendications

1. Dispositif d'insert de verrouillage pour chambre de pneumatique (20) destiné à équiper une roue de véhicule munie d'un pneumatique sans chambre à air monté sur une jante monobloc (21) à puits ou creux de jante (22) en vue de s'opposer au déjantage des talons (T₁, T₂) du pneumatique lors d'une crevaison par appui d'au moins un des talons (T₁) sur une butée, caractérisé en ce que la butée (15, 15a, 15b, 15c) est ménagée sur une bande (11) en un matériau rigide mais déformable conformée suivant un anneau fendu parallèlement à l'axe (X) de la jante qu'il équipe et qui est ainsi limitée par au moins deux bords (12, 13), la bande présentant une section droite correspondant au moins en partie à la forme de la jante (21) sur laquelle elle est appliquée et immobilisée lorsque sont rendus opératoires des moyens (19, 19a, 19b; V, E) de solidarisation de ses bords (12, 13), après montage de la bande sur la jante.

2. Dispositif selon la revendication 1, caractérisé en ce que la bande (11) est en une tôle métallique, ou en un matériau composite à base d'une résine thermoplastique armée, ou à base d'une résine thermodurcissable du type époxy, phénolique ou polyester armée de fibres de verre, ou est choisi parmi les polyuréthannes, ou encore parmi les matériaux du type des polyéther block amide ou encore du type des polyester élastomères.

3. Dispositif selon la revendication 1 ou la revendication 2, caractérisé en ce que la bande (11) est en un matériau composite à base d'une résine thermoplastique choisie dans la famille des polyamides séquencés pour mise en oeuvre par les techniques RIM (Reaction Injection molding) et est armée de renforts en fibres de verre.

4. Dispositif selon l'une quelconque des revendications précédentes, caractérisé en ce que la section droite de la bande (11) est quelque peu en 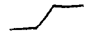 dans sa partie qui épouse le puits de jante (22) et le "grand siège" (23) de ladite jante sur lequel repose un premier talon (T₁) du pneumatique propre à coopérer avec la butée (15, 15a, 15b, 15c) en cas de crevaison dudit pneumatique (20).

5. Dispositif selon l'une quelconque des revendications 1 à 3, caractérisé en ce que la bande (11) est à section droite quelque peu en U avec une aile (30, 30b, 30c) avec laquelle peut venir en contact le second talon (T₂) du pneumatique (20) en cas de crevaison de ce dernier.

6. Dispositif selon l'une quelconque des revendications précédentes, caractérisé en ce qu'il comprend en outre une cale (18, 18a) en matériau du type élastomère fixée sur une tranche circonférentielle de la bande (11), ledit matériau étant avantageusement choisi dans la famille des caoutchoucs souples à bonnes caractéristiques de déformation rémanente à la compression.

7. Dispositif selon l'une quelconque des revendications précédentes, caractérisé en ce que les moyens de solidarisation des bords (12, 13) de l'anneau sont du type à vis/écrou (19, 19'; V, E) ou, en variante, du type des fermetures à genouillère (ou grenouillère) (19a).

8. Dispositif selon la revendication 7, caractérisé en ce que lesdits moyens de solidarisation (19, 19' ; 19a ; V, E) des bords (12, 13) de l'anneau comprennent des organes de réglage pour prendre en compte les différences de cotes des chambres de pneumatique et des jantes correspondant à une roue de dimension nominale donnée.

9. Dispositif selon la revendication 7, caractérisé en ce que les moyens de solidarisation des bords (12, 13) de l'anneau sont du type à vis/écrou (19, 19'), les vis étant prévues aux extrémités d'un ou de câble(s) noyé(s) dans le matériau constitutif de la bande (11) et l'écrou étant constitué par un manchon à deux taraudages de sens inversés.

10. Dispositif selon l'une quelconque des revendications précédentes, caractérisé en ce que la largeur de la bande est très légèrement inférieure (figure 5) ou sensiblement égale (figures 1, 3, 4) à la distance séparant les faces internes des talons (T₁, T₂) du pneumatique dans la condition de montage de celui-ci sur la jante (22).
